# EUROPÄISCHE PATENTANMELDUNG

(11) **EP 1 030 422 A2**
(43) Veröffentlichungstag der Anmeldung: **23.08.2000**
(21) Anmeldenummer: 99122614.3
(22) Anmeldetag: 13.11.1999
(51) Int. Cl.: H02B 1/04

(54) **Montageplatte für Funktionselemente**

(30) Priorität: 17.02.1999 DE 19906571
(71) Anmelder: Kaiser GmbH & Co., 58579 Schalksmühle (DE)
(72) Erfinder: Wangemann, Anke, D-58579 Schalksmühle (DE); Huebschke, Manfred, D-58579 Schalksmühle (DE)
(74) Vertreter: Köchling, Conrad, Dipl.-Ing.

(57) **Zusammenfassung**

Um eine Montageplatte (1) für Funktionselemente, die Lochungen zur Aufnahme von Befestigungsmitteln zur Befestigung der Funktionselemente an der Montageplatte (1) aufweist, zu schaffen, die universell einsetzbar ist, mit relativ geringem Materialeinsatz hergestellt werden kann und die an beliebigen Flächen oder dergleichen befestigt werden kann, wird vorgeschlagen, daß die Montageplatte (1) aus Kunststoff besteht und die Lochungen als die Montageplatte (1) durchsetzende Schlitze (2) ausgebildet sind, deren Schlitzlänge ein Vielfaches des Schaftdurchmessers der Befestigungsmittel oder Schrauben beträgt und deren Schlitzbreite etwa gleich dem Schaftdurchmesser ist, so daß der Schaft oder Gewindeschaft der Befestigungsmittel mit den Wandungen (3), die den Schlitz (2) zwischen sich begrenzen, in Eingriff ist.

## Beschreibung

Die Erfindung betrifft eine Montageplatte für Funktionselemente wie elektrische Taster, Schalter, Steckdosen, Bedienelemente, Platinen, Relais, Transformatoren, Gehäuse oder Gehäuseteile, pneumatische Funktionselemente oder dergleichen Bauteile, wobei die Montageplatte Lochungen zur Aufnahme von Befestigungsmitteln zur Befestigung der Funktionselemente an der Montageplatte aufweist und die Befestigungsmittel vorzugsweise als selbstschneidende oder gewindeformende Schrauben ausgebildet sind.

Bei der Installation von elektrischen Funktionselementen, wie beispielsweise elektrischen Tastern, Schaltern, Steckdosen, Bedienelementen, Platinen, Relais, Transformatoren oder auch Gehäuseteilen oder Gehäusen sowie pneumatischen Funktionselementen oder dergleichen Bauteilen tritt häufig das Problem auf, daß für die nachträgliche Anordnung solcher Funktionselemente unmittelbar an oder in der Nähe von mittels der Installationen beziehungsweise Funktionselemente betätigbarer Einrichtungen oder Maschinen ein zusätzlicher Montageplatz für die Funktionselemente geschaffen werden muß. Dies geschieht bisher häufig dadurch, daß dann, wenn elektrische Installationen oder dergleichen nachträglich vorgesehen werden müssen, Lochungen in Wände eingebracht werden müssen oder an Trägern oder dergleichen, um die einzelnen Bestandteile der zusätzlichen Installation befestigen zu können. Es ist auch bekannt, daß der Montierende sich beispielsweise aus Blech eine Montagehilfsplatte individuell schneidet und mit entsprechenden Lochungen ausrüstet, um die Montageplatte beispielsweise an einer Wand oder einem Maschinenteil befestigen zu können und um an der Montageplatte dann entsprechende Funktionselemente befestigen zu können.

Es sind auch Montageplatten für elektrotechnische Installationen bekannt, die ein Lochmuster aus runden oder quadratischen Löchern aufweisen. Diese Löcher dienen dazu, an der Montageplatte entsprechende Funktionselemente mittels selbstschneidender oder gewindefurchender Schrauben zu befestigen, wobei die entsprechenden Schrauben zur Befestigung der Funktionselemente in die entsprechenden Löcher der Montageplatte eingeschraubt werden.

Solche Montageplatten sind nur mit erheblichem Materialeinsatz herstellbar, da jeweils ein entsprechendes vielfältiges Lochmuster erzeugt werden muß, welches durch Wandungsteile umschlossene Löcher aufweist. Zudem ist eine derartige Ausbildung insoweit unbefriedigend als eine solche Montageplatte nicht universell für jede beliebige Art von Funktionselementen brauchbar ist, da die Lochabstände, die beispielsweise an den Funktionselementen vorgesehen sind, um entsprechende Befestigungsmittel vorzusehen, mittels derer die Funktionselemente an anderen Teilen, beispielsweise an einer Montageplatte befestigen zu können, nicht immer mit dem Lochmuster der Montageplatte übereinstimmen, so daß in manchen Fällen die Befestigung nicht oder nicht ohne weitere Hilfsmaßnahmen erfolgen kann.

Ausgehend von diesem Stand der Technik liegt der Erfindung die Aufgabe zugrunde eine Montageplatte gattungsgemäßer Art zu schaffen, die universell einsetzbar ist, mit relativ geringem Materialeinsatz hergestellt werden kann und die an beliebigen Flächen oder dergleichen befestigt werden kann.

Zur Lösung dieser Aufgabe schlägt die Erfindung vor, daß die Montageplatte aus Kunststoff besteht und die Lochungen als die Montageplatte durchsetzende Schlitze ausgebildet sind, deren Schlitzlänge ein Vielfaches des Schaftdurchmessers der Befestigungsmittel oder Schrauben beträgt und deren Schlitzbreite etwa gleich dem Schaftdurchmesser ist, so daß der Schaft oder Gewindeschaft der Befestigungsmittel mit den Wandungen, die den Schlitz zwischen sich begrenzen, in Eingriff ist.

Dadurch, daß die Lochungen als Schlitze ausgebildet sind, ist ein quasi stufenloses Lochbild erzeugt, welches dazu geeignet und bestimmt ist, Befestigungsbereiche für den Einsatz von Befestigungsschrauben zur Verfügung zu stellen, mittels derer beliebig geformte und gestaltete Funktionselemente an der Montageplatte befestigt werden können. Zudem ist durch die Ausbildung der Lochungen in Form von Schlitzen ein geringerer Materialeinsatz erforderlich, da die Vielzahl von Wandungsteilen, die bisher zur Bildungen von Lochungen in Montageplatten erforderlich waren, entbehrlich sind.

Die entsprechenden Befestigungsmittel, insbesondere Schrauben, können als gewindeschneidende Schrauben oder gewindeformende Schrauben ausgebildet sein, wobei beim Einschrauben der Schrauben in die Schlitze sich in den Schlitzwandungen ein entsprechendes Gewinde schneidet oder formt, so daß ein sicherer Halt der mit den Befestigungsmitteln an der Montageplatte befestigten Funktionselemente sichergestellt ist.

Insbesondere bei langen Schlitzen oder auch bei elastischem Herstellungsmaterial, aus dem die Montageplatte hergestellt ist, kann es geschehen, daß die den Schlitz begrenzenden Wandungen beim Einschrauben von mehreren Befestigungsmitteln in den gleichen Schlitz sich aufbauchen, so daß ein sicherer Sitz der mit den Schrauben oder dergleichen befestigten Funktionselemente an der Montageplatte nicht immer gewährleistet ist. Aus diesem Grunde ist bevorzugt vorgesehen, daß die den Schlitz begrenzenden Wandungen durch dünnwandige Materialbrücken miteinander verbunden sind.

Dadurch, daß die den Schlitz begrenzenden Wandungen durch dünnwandige Materialbrücken miteinander verbunden sind, wird die Formhaltung der Schlitze auch beim Einschrauben von mehreren Schrauben oder dergleichen in ein und denselben Schlitz gewährleistet, wobei die Materialbrücken derart ausgebildet sind, daß sie von den entsprechenden Befestigungsmitteln, insbesondere Schrauben, durchdrungen werden können, wodurch noch ein zusätzlicher Halt und sicherer Sitz für die Befestigungsmittel erreicht ist.

Bevorzugt ist dazu vorgesehen, daß die Materialbrücken durch orthogonal zwischen den Wandungen, die Wandungen verbindende Wandungsteile gebildet sind.

Desweiteren ist bevorzugt vorgesehen, daß die Materialbrücken oder Wandungsteile mit Abstand von der Oberseite und der Unterseite der Montageplatte ausgebildet sind, an denen die Schlitze ausmünden.

Durch diese Ausbildung ist sichergestellt, daß beim Einschrauben von Befestigungsmitteln, insbesondere von der Oberseite der Montageplatte her, zunächst ein Schlitz zum Einschrauben der Schrauben oder dergleichen zur Verfügung steht und erst nach einer gewissen Einschraubtiefe diese Schraube oder dergleichen auf die Materialbrücke oder das Wandungsteil trifft und dieses durchdringt. Es wird somit durch die Schlitzwandungen eine gewisse Führung und Haltung der Befestigungsmittel erreicht, so daß diese relativ einfach vom8 Montierenden eingeschraubt werden können und anschließend dann mit ihrer Spitze die Materialbrücken durchdringen.

Bevorzugt ist zudem vorgesehen, daß die Höhe des Schlitzes von der Oberseite der Montageplatte bis zur Materialbrücke oder zum Wandungsteil größer ist als die Höhe des Schlitzes von der Materialbrücke oder von dem Wandungsteil bis zur Unterseite der Montageplatte.

Besonders bevorzugt ist vorgesehen, daß eine Vielzahl von zueinander parallelen Schlitzen ausgebildet sind.

Eine besonders bevorzugte Weiterbildung wird darin gesehen, daß die Montageplatte Felder mit zueinander parallelen Schlitzen aufweist, wobei die Schlitze der benachbarten Felder rechtwinklig zueinander verlaufen.

Auf diese Weise ist eine Schlitzausbildung erzeugt, die für nahezu alle Anwendungsfälle geeignete Schlitzausbildungen für das Eindrehen von Befestigungsmitteln, beispielsweise Schrauben, zur Verfügung stellt. Auch ist es aufgrund dieser Ausbildung möglich, die Funktionselemente in nahezu beliebiger Anordnung auf der Montageplatte vorzusehen, wobei dennoch jeweils im Bereich der anzuordnenden Befestigungsschrauben entsprechende Schlitze zur Verfügung stehen.

Desweiteren kann bevorzugt sein, daß die Montageplatte zwischen den Schlitzen oder Schlitzfeldern räumlich groß dimensionierte Durchbrüche als Durchlaß für Kabel, Schläuche oder dergleichen Installationselemente aufweist.

Diese groß dimensionierten Durchbrüche können beispielsweise zum Durchführen oder Abführen von Kabeln oder dergleichen benutzt werden. Desweiteren können solche Öffnungen zum Einsatz von entsprechenden Funktionselementen Verwendung finden.

Um die Vielfalt der Installationsmöglichkeiten noch weiter zu verbessern, kann vorgesehen sein, daß die Schlitzfelder mindestens teilweise von weiteren Schlitzen umgeben sind.

Desweiteren ist bevorzugt vorgesehen, daß die Montageplatte Durchgangslochungen für Befestigungsmittel, insbesondere Schrauben, aufweist, mittels derer die Montageplatte ortsfest befestigbar ist.

Die Befestigung der Montageplatte kann an beliebigen Elementen erfolgen. So ist es beispielsweise möglich, die Montageplatte an Pfeilern aus Beton oder Stahl, an Ständerelementen, oder auch Regalen zu befestigen. Auch die Befestigung am Bedienpult oder an gestellfesten Teilen von Maschinen oder dergleichen ist möglich. Es ist selbstverständlich auch möglich, solche Montageplatten direkt an einer Wandfläche zu fixieren oder in eine Ausnehmung einer Wandfläche einzubringen. Auch die Anordnung an Decken, Schächten oder Kanälen ist möglich.

Zur Befestigung der Montageplatte an einer Stahlkonstruktion oder dergleichen ist bevorzugt vorgesehen, daß an der Montageplatte befestigt oder in die Montageplatte eingebettet mindestens ein Dauermagnet vorgesehen ist, mittels dessen die Montageplatte an magnetisierbaren, ortsfesten Installationen, z.B. Eisenträgern, befestigbar ist.

Eine besonders kostengünstige und platzsparende Ausbildung wird dadurch erreicht, daß die Montageplatte eine Höhe von wenigen Millimetern, vorzugsweise von mindestens 10 mm und höchstens 16 mm, aufweist.

Dabei kann zudem vorgesehen sein, daß die Dicke der Materialbrücken oder Wandungsteile etwa 2 mm beträgt.

Desweiteren kann bevorzugt sein, daß die Dicke der die Schlitze begrenzenden Wandungen etwa 2 mm beträgt.

Bevorzugt ist zudem vorgesehen, daß die Montageplatte rechteckig ausgebildet ist.

Zudem kann vorgesehen sein, daß die Randkanten der Montageplatte Anreihungsmittel aufweisen, so daß mehrere Montageplatten zu einer Einheit zusammensetzbar sind.

Beispielsweise können die Randkanten der Montageplatte mit schwalbenschwanzartigen Ausnehmungen und an der dazu parallelen Randkante mit schwalbenschwanzartigen Vorsprüngen versehen sein, so daß mehrere Montageplatten an den Randkanten miteinander verbunden werden können, so daß aus mehreren Montageplatten eine großflächige Montageeinheit zusammengesetzt werden kann.

Zudem kann vorgesehen sein, daß die Unterseite der Montageplatte mindestens eine vorzugsweise zwei einander kreuzende Aufnahmenuten für das Aufbringen auf Montageschienen, z.B. Hutprofilschienen, aufweist.

Durch diese Ausbildung ist es möglich, solche Montageplatten auch auf üblichen Montageschienen, beispielsweise Hutprofilschienen, in einfacher Weise zu fixieren. Um den sicheren Sitz auf einer solchen Schiene zu gewährleisten, kann im Bereich der Aufnahmenuten die Anordnung von Rastnasen vorgesehen sein, oder aber es können im Bereich der Aufnahmenuten Madenschrauben oder dergleichen vorgesehen sein, die bei in Sollage befindlichen Teilen eingeschraubt werden können, so daß dann ein sicherer Verbund zwischen der Montageplatte und der Montageschiene erreicht ist.

Unter Umständen kann auch vorgesehen sein, daß an der Montageplatte eine Abdeckhaube, vorzugsweise schwenkbeweglich gehaltert ist, die die Oberseite der Montageplatte teilweise oder vollständig samt darauf installierten Funktionselementen abdeckt.

Eine vorteilhafte Weiterbildung, die auch selbständig als erfinderisch angesehen wird, wird darin gesehen, daß die Vorrichtung aus einer L-förmigen Konsole besteht, deren Schenkel Lochungen zur Anordnung von Befestigungsmitteln aufweisen, mittels derer die Konsole an einer Montagefläche befestigbar ist und mittels derer die Montageplatte an einem Schenkel befestigbar ist, wobei in dem von den Schenkeln eingeschlossenen Winkel eine weitere Fläche mit Lochungen zur Anordnung von Befestigungsmitteln ausgebildet ist, die mit dem einen Schenkel oder mit beiden Schenkeln der Konsole einen von 90° abweichenden Winkel von vorzugsweise 30 ° und/oder 45 ° einschließt.

Diese Vorrichtung stellt eine Montagehilfe zur Verfügung, mittels derer die erfindungsgemäße Montageplatte oder auch eine beliebige andere Montageplatte in unterschiedlicher Ausrichtung an einer Montagefläche befestigbar ist. Beispielsweise kann aufgrund der beschriebenen Anordnung die L-förmige Konsole mit einem Schenkel an einem vertikal gerichteten Bauteil fixiert werden, während an dem dann horizontal gerichteten Schenkel die Montageplatte befestigt werden kann. Andererseits kann auch die Konsole mit einem Schenkel an einem Bauteil befestigt werden, während die Montageplatte an der weiteren Fläche der Konsole befestigt werden kann, so daß sie beispielsweise bei einem an einer vertikalen Fläche befestigten Schenkel der L-förmigen Konsole eine Auflage und Befestigungsfläche für die Montageplatte zur Verfügung stellt, die nicht horizontal, sondern im Winkel von 45° oder auch 30° gegenüber der Horizontalen oder der Vertikalen geneigt ist. Es ist auch möglich, die Vorrichtung mit einer der weiteren Flächen an einer Wandfläche oder dergleichen zu befestigen, und dann auf einen der Schenkel oder auch beide Schenkel der L-förmigen Konsole Montageplatten aufzubringen und zu befestigen.

Bevorzugt ist dabei vorgesehen, daß die Konsole aus einem Formteil besteht, das zur Bildung der Schenkel zwei zueinander parallele mit seitlichem Abstand voneinander angeordnete L-Profilstücke aufweist, die durch eine Kastenprofil ergänzt und verbunden sind, an dessen parallele etwa dreieckige Seitenwandungen, die die Katheten der Dreiecksform bilden, randseitig die Randkanten der L-Profilstücke anschließen, wobei die Hypothenusen der Seitenwandungen durch ein rechtwinklig von den Hypothenusen abragendes, die Hypothenusen verbindendes Wandungsteil ergänzt sind, das die weitere Fläche mit den Lochungen für Befestigungsmittel bildet.

Zudem kann dabei bevorzugt sein, daß das weitere Wandungsteil über seinen Längsverlauf zwei zueinander abgewinkelte Teilflächen aufweist, wobei der Winkel zwischen den Teilflächen vorzugsweise 165° beträgt.

Ein Ausführungsbeispiel der Erfindung ist in der Zeichnung dargestellt und im folgenden näher beschrieben. Es zeigt:
- Figur 1: eine Montageplatte in Draufsicht;
- Figur 2: desgleichen im Schnitt II/II der Figur 1 gesehen;
- Figur 3: die Montageplatte von einer schmalen Stirnseite her gesehen;
- Figur 4: die Montageplatte von einer langen Stirnseite her gesehen;
- Figur 5: die Montageplatte von der Unterseite gesehen;
- Figur 6: eine Montagehilfsvorrichtung in isometrischer Darstellung von hinten gesehen;
- Figur 7: desgleichen in Vorderansicht.

In den Zeichnungsfiguren 1 bis 5 ist eine allgemein bezeichnete Montageplatte für Funktionselemente, wie elektrische Taster, Schalter, Steckdosen, Bedienelemente, Platinen, Relais, Transformatoren, Gehäuse oder Gehäuseteile, pneumatische Funktionselemente oder dergleichen Bauteile gezeigt. Die Montageplatte 1 weist Lochungen zur Aufnahme von in der Zeichnung nicht dargestellten Befestigungsmitteln zur Befestigung der Funktionselemente an der Montageplatte 1 auf. Solche Befestigungsmittel sind vorzugsweise als selbstschneidende oder gewindeformende Schrauben ausgebildet. Die Montageplatte 1 besteht aus Kunststoff, der vorzugsweise säurebeständig ist, hohen mechanischen Belastungen standhalten kann und UV-beständig ist.

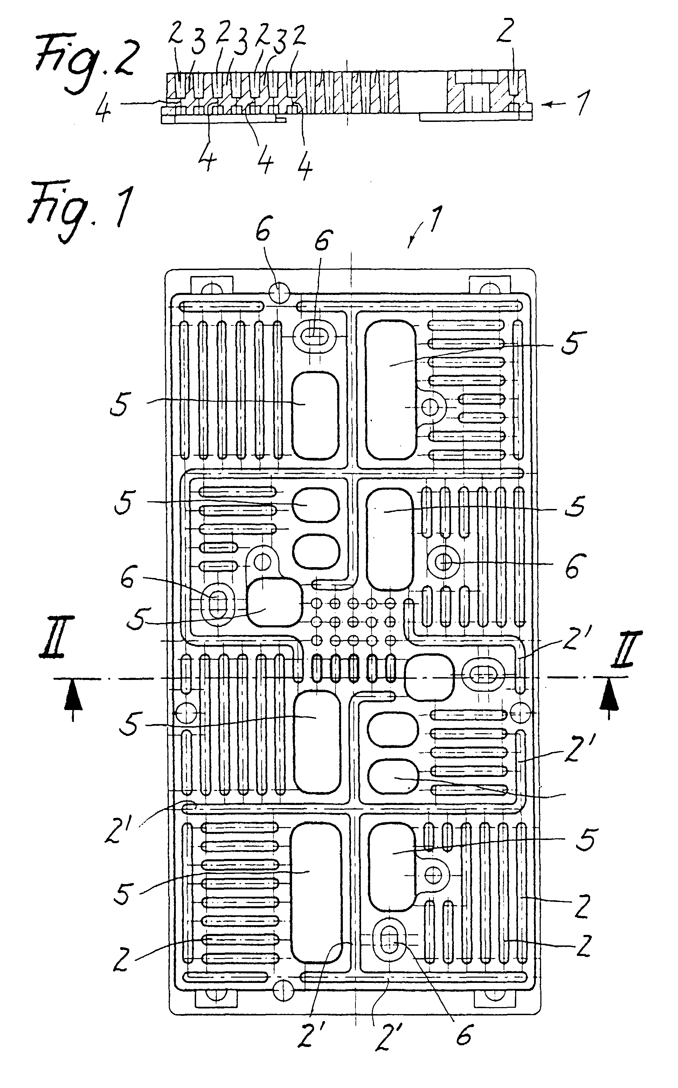

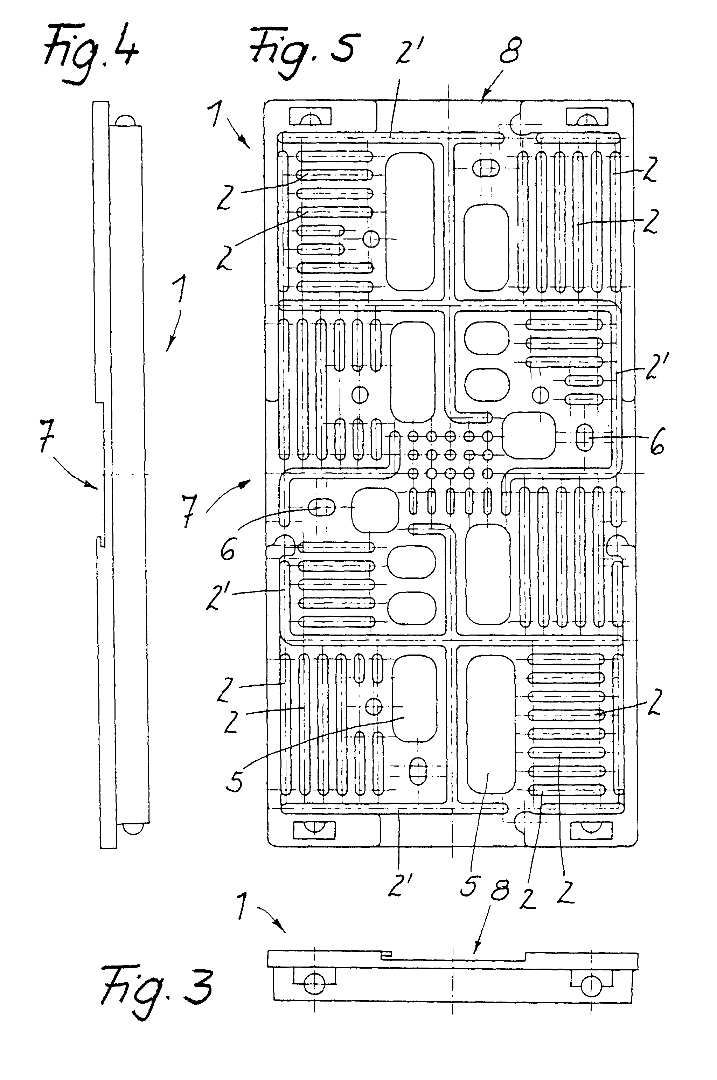

Die in der Montageplatte 1 vorgesehenen Lochungen sind als die Montageplatte 1 durchsetzende Schlitze 2 ausgebildet, deren Schlitzlänge ein vielfaches des Schaftdurchmesser der Befestigungsmittel oder Schrauben beträgt. Deren Schlitzbreite ist etwa gleich dem Schaftdurchmesser der einzusetzenden Befestigungsschrauben oder dergleichen, so daß der Schaft oder Gewindeschaft der Befestigungsmittel mit den Wandungen, die den Schlitz zwischen sich begrenzen, beim Einschrauben in Eingriff ist. Wie insbesondere aus Figur 2 ersichtlich, sind die den Schlitz begrenzenden Wandungen 3 durch dünnwandige Materialbrücken 4 miteinander verbunden. Die Materialbrücken 4 sind durch orthogonal zwischen den Wandungen 3 angeformte, die Wandungen 3 verbindende Wandungsteile gebildet. Ebenso ist insbesondere aus Figur 2 ersichtlich, daß die Materialbrücken 4 beziehungsweise Wandungsteile mit Abstand von der Oberseite der Montageplatte 1 (Oberseite liegt in Figur 2 oben) und auch mit Abstand von der Unterseite der Montageplatte 1 ausgebildet. Die Höhe des Schlitzes 2 von der Oberseite der Montageplatte 1 bis zur Materialbrücke 4 ist größer als die Höhe des Schlitzes von der Materialbrücke 4 bis zur Unterseite der Montageplatte 1. Durch diese Ausbildung wird eine Formhaltung der Schlitze 2 beim Einschrauben von Befestigungsschrauben oder dergleichen sichergestellt, wobei die einzuschraubenden Schrauben sowohl in den Wandungsteilen 3 Gewinde ausbilden als auch die Materialbrücken 4 gewindebildend durchdringen. Es wird somit nicht nur eine Formhaltung, sondern auch eine sichere Haltung der Schraube als solche erreicht.

Wie insbesondere aus Figur 1 ersichtlich, weist die Montageplatte Felder mit jeweils zueinander parallelen Schlitzen auf. Die Schlitze 2 der benachbarten Felder sind rechtwinklig zueinander gerichtet. Beispielsweise ist in Figur 1 unten links ein Feld mit zueinander parallelen von rechts nach links verlaufenden Schlitzen 2 vorgesehen, während daneben ein Feld mit zueinander parallelen von oben nach unten gerichteten Schlitzen 2 ausgebildet ist. In der Folge ist dann in dem nächsthöheren Feld der Montageplatte 1 die entgegengesetzte Ausrichtung der Schlitze 2 vorgenommen, was sich dann in den folgenden Feldern analog wiederholt.

Auf diese Weise wird eine außerordentlich hohe Montagevielfalt erreicht. Zusätzlich kann die Montageplatte 1 zwischen den Schlitzen 2 oder Schlitzfeldern räumlich groß dimensionierte Durchbrüche 5 aufweisen, die als Durchlaß für Kabel, Schläuche oder dergleichen Installationselemente geeignet sind, oder auch zum Einsatz von Installationsbestandteilen dienen können.

Die Schlitzfelder sind mindestens teilweise von weiteren Schlitzen umgeben. Diese Schlitze sind mit 2' bezeichnet. Auch hierdurch wird die Montagevielfalt noch erhöht. Desweiteren weist die Montageplatte 1 Durchgangslochungen 6 für Befestigungsmittel, insbesondere Schrauben auf, mittels derer die Montageplatte 1 an anderen Installationen, beispielsweise ortsfest befestigbar ist.

Wie aus der Darstellung insbesondere gemäß Figur 2 ersichtlich, kann die Montageplatte 1 eine Höhe von wenigen Millimetern, beispielsweise 10 Millimetern aufweisen. Die Dicke der Materialbrücken 4 beträgt dabei etwa 2 mm. Die Dicke der die Schlitze 2 begrenzenden Wandungen kann beispielsweise etwa 2 mm betragen. Auch die Schlitzweite kann beispielsweise 2 mm betragen.

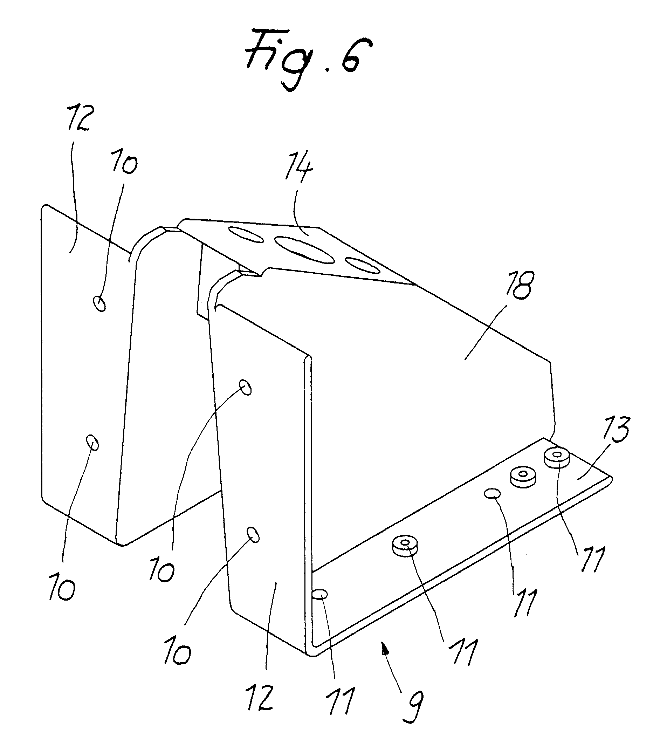

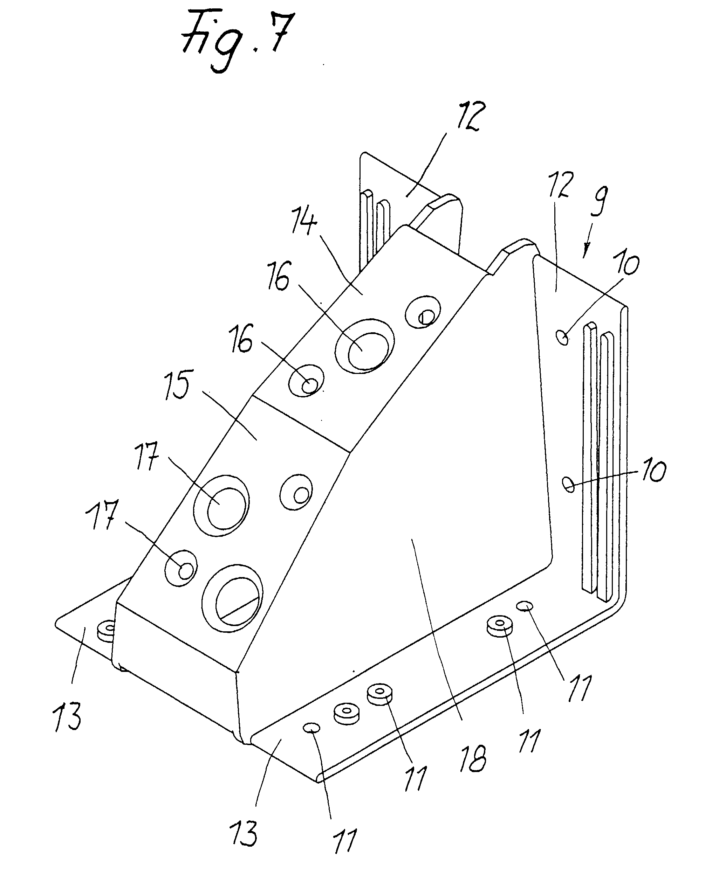

Vorzugsweise ist die Montageplatte 1 rechteckig ausgebildet, wie in den Zeichnungen gezeigt. Wie insbesondere aus Figur 5 ersichtlich, weist die Montageplatte 1 an der Unterseite zwei zueinander kreuzende Aufnahmenuten 7,8 für die Aufnahme auf Montageschienen, beispielsweise Hutprofilschienen auf. Dazu kann im Bereich der Aufnahmenuten die Anordnung von Rastmitteln oder auch die Anordnung von Klemmitteln, wie Madenschrauben oder dergleichen vorgesehen sein, um einen sicheren Halt zu gewährleisten.

In der Zeichnungsfigur 6 und 7 ist ein Vorrichtung zur Halterung einer Montageplatte 1 gezeigt. Die Vorrichtung besteht aus einer L-förmigen Konsole 9, deren Schenkel 12,13 Lochungen 10,11 aufweisen, die zum Durchtritt von Befestigungsmittel dienen, mittels derer die Konsole 9 an einer Montagefläche befestigbar ist oder mittels derer die Montageplatte an einem Schenkel 12,13 der Konsole 9 befestigbar ist. In dem von den Schenkeln 12,13 eingeschlossenen Winkel ist eine weitere Fläche 14,15 mit Lochungen 16,17 zur Anordnung von Befestigungsmitteln ausgebildet, so daß auf diesen Flächen 14,15 ebenfalls die Montageplatte 1 befestigbar ist oder die Konsole 9 mit einer dieser Flächen an einer Montageebene befestigbar ist. Die Flächen 14,15 schließen mit den Schenkeln 12,13 einen von 90 ° abweichenden Winkel ein, so daß im Ausführungsbeispiel eine Montageebene im Winkel von 45 ° (Fläche 15) oder von 30 ° (Fläche 14) gebildet ist. Die Konsole 9 besteht aus einem Formteil aus Kunststoff, daß zur Bildung der Schenkel 12,13 zwei zueinander parallele mit seitlichem Abstand voneinander angeordnete L-Profilstücke aufweist, die durch ein Kastenprofil ergänzt und verbunden sind, an dessen parallele etwa 3-eckige Seitenwandungen 18 die Randkanten der L-Profilstücke anschließen, wobei die Hypothenusen der Seitenwandungen 18 durch ein rechtwinklig von den Hypothenusen abragendes, die Hypothenusen verbindendes Wandungsteil ergänzt sind, das die weiteren Flächen 14,15 mit den Lochungen 16, 17 für Befestigungsmittel bildet. Hierzu weist dieses weitere Wandungsteil über seinen Längsverlauf zwei zueinander abgewinkelte Teilflächen, nämlich die Flächen 14 und 15 auf. Der Winkel zwischen den beiden Flächen beträgt etwa 165°.

Die Konsole erlaubt nicht nur die Befestigung an unterschiedlichen Bezugsflächen, sondern auch die Befestigung einer Montageplatte in unterschiedlichen Winkellagen relativ zu der Befestigungsfläche beziehungsweise relativ zum Benutzer. Es ist auch möglich, an der Konsole 9 mehrere Montageplatten zu befestigen, so beispielsweise wenn die Konsole 9 mit der Fläche 14 an einer Wandfläche fixiert wird, so daß dann die Schenkel 12 und 13 zur Befestigung von zwei Montageplatten dienen können.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Montageplatte (1) für Funktionselemente wie elektrische Taster, Schalter, Steckdosen, Bedienelemente, Platinen, Relais, Transformatoren, Gehäuse oder Gehäuseteile, pneumatische Funktionselemente oder dergleichen Bauteile, wobei die Montageplatte (1) Lochungen zur Aufnahme von Befestigungsmitteln zur Befestigung der Funktionselemente an der Montageplatte (1) aufweist und die Befestigungsmittel vorzugsweise als selbstschneidende oder gewindeformende Schrauben ausgebildet sind, **dadurch gekennzeichnet, daß** die Montageplatte (1) aus Kunststoff besteht und die Lochungen als die Montageplatte (1) durchsetzende Schlitze (2) ausgebildet sind, deren Schlitzlänge ein Vielfaches des Schaftdurchmessers der Befestigungsmittel oder Schrauben beträgt und deren Schlitzbreite etwa gleich dem Schaftdurchmesser ist, so daß der Schaft oder Gewindeschaft der Befestigungsmittel mit den Wandungen (3), die den Schlitz (2) zwischen sich begrenzen, in Eingriff ist.

2. Montageplatte nach Anspruch 1, **dadurch gekennzeichnet, daß** die den Schlitz (2) begrenzenden Wandungen (3) durch dünnwandige Materialbrücken (4) miteinander verbunden sind.

3. Montageplatte nach Anspruch 1 oder 2, **dadurch gekennzeichnet, daß** die Materialbrücken (4) durch orthogonal zwischen den Wandungen (3)ausgebildete, die Wandungen (3) verbindende Wandungsteile gebildet sind.

4. Montageplatte nach einem der Ansprüche 1 bis 3, **dadurch gekennzeichnet, daß** die Materialbrücken (4) oder Wandungsteile mit Abstand von der Oberseite und der Unterseite der Montageplatte (1) ausgebildet sind, an denen die Schlitze (2) ausmünden.

5. Montageplatte nach einem der Ansprüche 1 bis 4, **dadurch gekennzeichnet, daß** die Höhe des Schlitzes (2) von der Oberseite der Montageplatte (1) bis zur Materialbrücke (4) oder zum Wandungsteil größer ist als die Höhe des Schlitzes (2) von der Materialbrücke (4) oder von dem Wandungsteil bis zur Unterseite der Montageplatte (1).

6. Montageplatte nach einem der Ansprüche 1 bis 5, **dadurch gekennzeichnet, daß** eine Vielzahl von zueinander parallelen Schlitzen (2) ausgebildet sind.

7. Montageplatte nach einem der Ansprüche 1 bis 6, **dadurch gekennzeichnet, daß** die Montageplatte (1) Felder mit zueinander parallelen Schlitzen (2) aufweist, wobei die Schlitze (2) der benachbarten Felder rechtwinklig zueinander verlaufen.

8. Montageplatte nach einem der Ansprüche 1 bis 7, **dadurch gekennzeichnet, daß** die Montageplatte (1) zwischen den Schlitzen (2) oder Schlitzfeldern räumlich groß dimensionierte Durchbrüche (5) als Durchlaß für Kabel, Schläuche oder dergleichen Installationselemente aufweist.

9. Montageplatte nach einem der Ansprüche 1 bis 8, **dadurch gekennzeichnet, daß** die Schlitzfelder mindestens teilweise von weiteren Schlitzen (2') umgeben sind.

10. Montageplatte nach einem der Ansprüche 1 bis 9, **dadurch gekennzeichnet, daß** die Montageplatte (1) Durchgangslochungen (6) für Befestigungsmittel, insbesondere Schrauben, aufweist, mittels derer die Montageplatte (1) ortsfest befestigbar ist.

11. Montageplatte nach einem der Ansprüche 1 bis 10, **dadurch gekennzeichnet, daß** an der Montageplatte (1) befestigt oder in die Montageplatte (1) eingebettet mindestens ein Dauermagnet vorgesehen ist, mittels dessen die Montageplatte (1) an magnetisierbaren, ortsfesten Installationen, z.B. Eisenträgern, befestigbar ist.

12. Montageplatte nach einem der Ansprüche 1 bis 11, **dadurch gekennzeichnet, daß** die Montageplatte (1) eine Höhe von wenigen Millimetern, vorzugsweise von mindestens 10 mm und höchstens 16 mm, aufweist.

13. Montageplatte nach einem der Ansprüche 1 bis 12, **dadurch gekennzeichnet, daß** die Dicke der Materialbrücken (4) oder Wandungsteile etwa 2 mm beträgt.

14. Montageplatte nach einem der Ansprüche 1 bis 13, **dadurch gekennzeichnet, daß** die Dicke der die Schlitze (2) begrenzenden Wandungen (3) etwa 2 mm beträgt.

15. Montageplatte nach einem der Ansprüche 1 bis 14, **dadurch gekennzeichnet, daß** die Montageplatte (1) rechteckig ausgebildet ist.

16. Montageplatte nach einem der Ansprüche 1 bis 15, **dadurch gekennzeichnet, daß** die Randkanten der Montageplatte (1) Anreihungsmittel aufweisen, so daß mehrere Montageplatten (1) zu einer Einheit zusammensetzbar sind.

17. Montageplatte nach einem der Ansprüche 1 bis 16, **dadurch gekennzeichnet, daß** die Unterseite der Montageplatte (1) mindestens eine vorzugsweise zwei einander kreuzende Aufnahmenuten (7,8) für das Aufbringen auf Montageschienen, z.B. Hutprofilschienen, aufweist.

18. Montageplatte nach einem der Ansprüche 1 bis 17, **dadurch gekennzeichnet, daß** an der Montageplatte (1) eine Abdeckhaube, vorzugsweise schwenkbeweglich gehaltert ist, die die Oberseite der Montageplatte (1) teilweise oder vollständig samt darauf installierten Funktionselementen abdeckt.

19. Vorrichtung zur Halterung einer Montageplatte, insbesondere einer Montageplatte nach einem der Ansprüche 1 bis 18, **dadurch gekennzeichnet, daß** die Vorrichtung aus einer L-förmigen Konsole (9) besteht, deren Schenkel (12,13) Lochungen (10,11) zur Anordnung von Befestigungsmitteln aufweisen, mittels derer die Konsole (9) an einer Montagefläche befestigbar ist und mittels derer die Montageplatte (1) an einem Schenkel (12,13) befestigbar ist, wobei in dem von den Schenkeln (12,13) eingeschlossenen Winkel eine weitere Fläche (14,15) mit Lochungen (16,17) zur Anordnung von Befestigungsmitteln ausgebildet ist, die mit dem einen Schenkel oder mit beiden Schenkeln (12,13) der Konsole einen von 90° abweichenden Winkel von vorzugsweise 30° und/oder 45° einschließt.

20. Vorrichtung nach Anspruch 19, **dadurch gekennzeichnet, daß** die Konsole (9) aus einem Formteil besteht, das zur Bildung der Schenkel (12,13) zwei zueinander parallele mit seitlichem Abstand voneinander angeordnete L-Profilstücke aufweist, die durch eine Kastenprofil ergänzt und verbunden sind, an dessen parallele etwa dreieckige Seitenwandungen (18), die die Katheten der Dreiecksform bilden, randseitig die Randkanten der L-Profilstücke anschließen, wobei die Hypothenusen der Seitenwandungen (18) durch ein rechtwinklig von den Hypothenusen abragendes, die Hypothenusen verbindendes Wandungsteil ergänzt sind, das die weitere Fläche (14,15) mit den Lochungen (16,17) für Befestigungsmittel bildet.

21. Vorrichtung nach Anspruch 19 oder 20, **dadurch gekennzeichnet, daß** das weitere Wandungsteil (14,15) über seinen Längsverlauf zwei zueinander abgewinkelte Teilflächen aufweist, wobei der Winkel zwischen den Teilflächen vorzugsweise 165° beträgt.
